**Europäisches Patentamt**

**European Patent Office**

**Office européen des brevets**

(19)

(11) Publication number: **0 223 757**
**B1**

(12) # EUROPEAN PATENT SPECIFICATION

(45) Date of publication of the patent specification:
**16.08.89**

(51) Int. Cl.⁴: **F23L 7/00**

(21) Application number: **86850335.0**

(22) Date of filing: **06.10.86**

(54) Valve device.

(30) Priority: **22.11.85 SE 8505515**

(43) Date of publication of application:
**27.05.87 Bulletin 87/22**

(45) Publication of the grant of the patent:
**16.08.89 Bulletin 89/33**

(84) Designated Contracting States:
**DE ES FR**

(56) References cited:
**DE-A- 1 913 859**
**DE-A- 2 243 386**
**DE-B- 2 239 507**
**US-A- 3 212 526**

(73) Proprietor: **AGA AKTIEBOLAG, S-181 81 Lidingö(SE)**

(72) Inventor: **Nilsson, Leif, Södra Kungsvägen 260 A,
S-181 62 Lidingö(SE)**

(74) Representative: **Karlzén, Bengt Erik et al, AGA AB
Patent Department, S-181 81 Lidingö(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a valve device for enrichment of combustion air with oxygen, the valve device being connected to the supply line for combustion air and comprising a valve body with a chamber which is divided into an upper and a lower portion by a membrane clamped in the chamber disposed at one side of which membrane is a spring member and disposed at the other side of which is at least one rod-shaped member in a duct in the valve body and wherein disposed in the valve body is a duct for the oxygen gas which via an opening and closing device leads into the supply line, the said opening and closing device being connected to the rod-shaped member.

As is known combustion air is supplied to a burner. As a rule, the combustion air is conveyed by means of a fan through a supply line. The maximum pressure can then lie between +700 mm water column and +2000 mm water column. To regulate the air flow use is made of a damper which can throttle the air flow in the supply line to a greater or lesser extent. In response to a change of flow in the line the pressure in the line may be lowered quadratically in proportion to the change in flow. If, for example, the flow is reduced to half, the pressure will be reduced to one quarter.

The object of the present invention is to provide a valve device with the aid of which an oxygen enrichment of the combustion air is made possible, the valve then being arranged to maintain a constant oxygen content in the combustion air at a variation of the combustion air flow within the range of 25 per cent – 100 per cent of the maximum flow, i.e. independent of the pressure in the combustion air.

As to the prior art the US-A 3 212 526 can be mentioned, which describes a three-way valve device of a so called plug type. The plug comprises two main parts. The first part is a rotatable sleeve arranged in the valve body.

The sleeve is provided with three openings which cooperate with an air inlet, a gas inlet and a gas-air mixture outlet, respectively. which are arranged in the valve body. The rotation of the sleeve is achieved by an electric motor. The second part is a piston which is axially movable in the sleeve. The piston is connected to a diaphragm which is arranged in the valve body. The diaphragm and the piston are operated by an air passage which connects the air supply line of the valve with the space below the diaphragm so that this space will be kept at atmospheric pressure. When the sleeve rotates the respective areas of the gas port and the air port are varied and thereby the ratio between the supplied gas and air. In the outlet part a mixture of a certain ratio then is obtained.

The corresponding mixture outlet in the valve body is via a pump device connected to a burner. As the burner requires more or less fuel the pressure in the space between the piston and the diaphragm will vary with respect to the atmospheric pressure. This means that the piston will rise or fall and thereby varying the opening of the ports for gas and air. By this axial movement of the piston a correct amount of the mixture is supplied to the burner. This amount is determined by the suction power of the pump connected in the supply line to the burner. For a satisfactory working of the described device both media must have the same pressure. Furthermore, the device itself cannot automatically adjust the mixture ratio to a correct value. The inlet air is here passive and has not an operational function as is required in a valve for the enrichment of combustion air with oxygen.

Two other references can also be mentioned, namely DE-A 1 913 859 and DE-A 2 243 386 which, however, are not relevant in this case.

In the German DE-A 1 913 859 is described a manually operated mixing valve, for two media, which comprises a valve body with two inlets and with two axial slot outputs. within the body is arranged a pivoted hole cone which comprises axial slots which are arranged to cooperate with the output slots of the housing. In a certain position of the cone a connection is established between the two media inputs and the hole of the cone, which hole is connected to the output of the valve.

In the German DE-A 2 243 386 another mixing valve of a three-valve type is described. There are three connections to the valve body. Two of the connections can be used as inlets and the third one as an outlet. The media fed to the inlets will be mixed in the hole cone of the valve and then fed to the output.

The valve device according to the invention is then characterized largely in that the duct in which the rodshaped member is disposed is connected to the supply line for the compressed air and to the lower portion (below the membrane) in the valve chamber, in that the opening and closing device is disposed largely in the centre of the cross-section of the supply line, in that the portion of the oxygen gas duct situated in the supply line is elaborated as a tube disposed in the mouth part of which are apertures and in that disposed over the tube end is an axially displaceable sleeve member which, in its lower portion, is provided with grooves and which has its upper portion sited at the rod-shaped member, the grooves in the sleeve member then being arranged to interact with the apertures in the mouth portion, said membrane area, spring force and area of openings, slots and grooves are dimensioned so that the ratio between the amount of oxygen gas introduced by the valve device into the combustion air line and the amount of combustion air supplied to the line are constant independently of the pressure on the combustion air line.

The invention is further characterized in that the sum of the areas for openings and slots is equal to the crosssectional area in the oxygen gas duct and in that the sum of the areas of grooves lies within the range of 40-80 per cent of the cross-sectional area in the oxygen gas duct when the valve is fully open.

The invention will now be described in more detail and with reference to the accompanying drawings, of which Fig. 1 shows an axial section through the valve device, Fig. 2 and Fig. 3 show radial sections through the opening and closing device of the valve and Fig. 4 illustrates the principle of a regulating system in which the valve device is included.

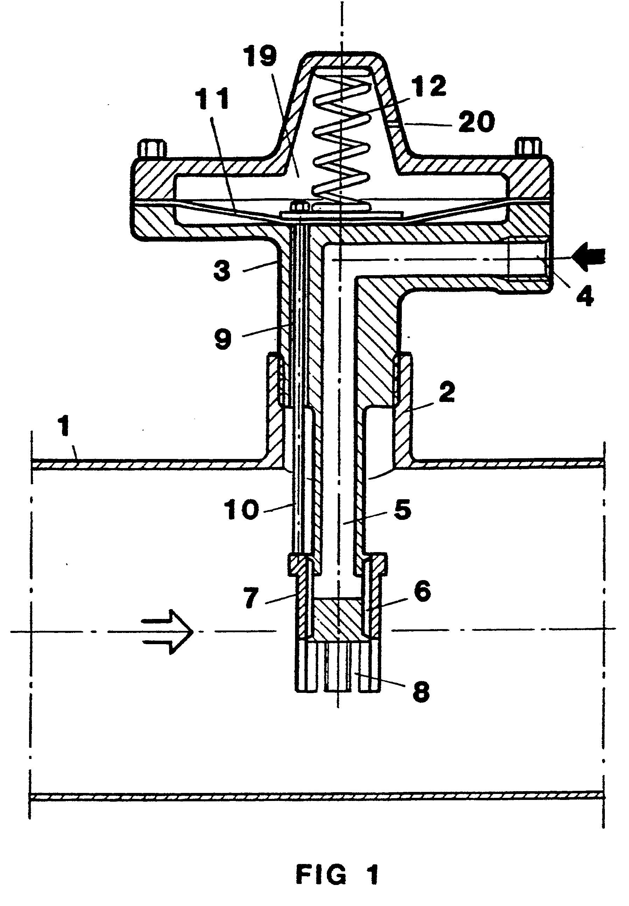

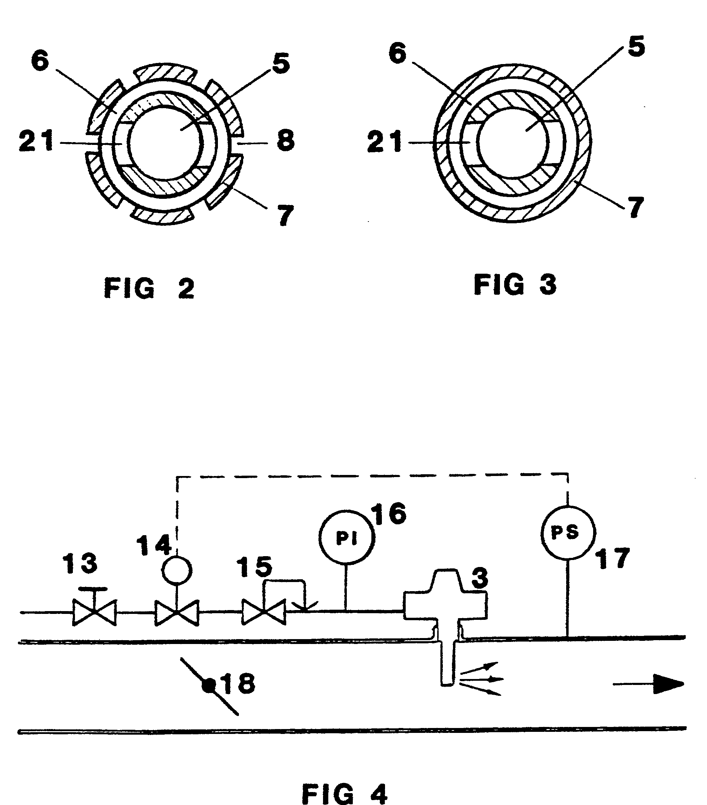

As evident from Fig. 1 the valve device is connected to a supply line 1 for combustion air. The line is provided with a muff member 2 in which the valve body 3 is mounted by means of a threaded joint. The valve body is elaborated with a chamber 19 into which is clamped a membrane 11 which divides the chamber into an upper and lower portion. Disposed in the upper portion between the membrane and the valve body is a spring member 12. The upper portion 12 communicates through a duct 20 with the surroundings. The lower portion communicates through a duct 9 provided in the valve body with the supply line 1 for combustion air. Displaceably arranged in the duct 9 is at least one rodshaped member 10 one end of which is attached to the membrane 11 and the other end of which is attached to the movable portion 7 in the opening and closing device of the valve. The fixed portion in this device is disposed at the mouth of the oxygen gas duct 5 which is provided in the valve. The supply line for oxygen gas is connected to the valve through the connection member 4. The opening and closing device for the oxygen gas is, as may be seen from Fig. 1, disposed largely in the centre of the cross-section of the supply line 1. The fixed portion comprises the end part of the duct 5, radial holes 21 then being provided in the tube as illustrated in Fig. 2 and Fig. 3. The tube is also provided with an end plate. Fig. 2 and Fig. 3 illustrate cross-sections through Fig. 1. When the sleeveshaped movable portion is moved upwards a communication will be established between the duct 5 and the tube 1, whereupon the gas in the duct 5 can flow through the hole 21 via the slot 6 and the grooves 8 out into the tube 1. The higher the sleeve-shaped member is raised the larger the opening for the oxygen flow will be.

Shown in Fig. 4 is the principle for a regulating system in which the valve device 3 is included. In the oxygen supply line the system comprises a shutoff valve 13, a valve device 14, a regulating device 15 and a pressure gauge 16 which measures the oxygen pressure in the line. Connected to the supply line for the combustion air after the valve device 3 is a so-called pressure monitor 17 which senses the pressure in the combustion air line. The pressure monitor 17 is connected to the valve device 14 so that the latter opens when the pressure monitor senses a pressure in the line 1. The oxygen pressure is regulated by means of the regulator 15 so that the desired oxygen flow to the valve 3 is obtained. Disposed in the combustion air line before the valve device 3 is a damper member 18 for regulation of the combustion air.

When the combustion air passes through the line 1 the air will also pass into the duct 9 up to the lower portion of the chamber 19 and will then press the membrane 11 upwards. The membrane is then accompanied by the rod-shaped member 10 and also by the movable sleeve 7. The membrane compresses the spring 12 until a state of equilibrium prevails between press force and spring force. when the movable sleeve 7 is moved upward the communication is opened between the oxygen gas duct 5 and the combustion air line 1. The gas from the duct 5 is able to pass via the slot 6 through the grooves 8 out into the tube 1. As already mentioned the commnunication opening will be larger the higher the sleeve 7 is lifted. The area of the grooves and the openings, as well as the membrane area and spring force, are then so dimensioned that the oxygen flow is proportional to the flow of air through the tube 1. If the combustion air flow is decreased the pressure on membrane 11 falls, whereupon this lowers the sleeve member 7 via the rod 10 and thus reduces the aperture for the air flow of oxygen gas in the tube 1. The reduction of the oxygen gas flow is still proportional to the combustion air flow.

The combustion air to the burner is usually regulated within the range of 25–100 per cent of its maximum flow. The valve device is so elaborated that proportionality between combustion air and oxygen gas prevails within this regulation range. A constant oxygen content in the combustion air is also obtained by means of the described valve device. This is obtained independently of the pressure changes occurring in the combustion air. The maximum oxygen flow is determined through appropriate dimensioning of the components of the valve. The maximum flow can subsequently be regulated to a certain extent by means of the regulator 15. The dimensioning implies that spring force and membrane area are determined and that the area of the holes 21 in the oxygen gas tube and of the slot 6 between tube and sleeve and of the grooves 8 in the sleeve member 7 are determined. The areas for the openings 21 and the area for the slot 6 are thus equal to the cross-sectional area in the oxygen gas duct 5. The sum of the area for the grooves 8 lies in the range of 40–80 per cent of the cross-sectional area in the oxygen gas duct when the valve is fully open.

As evident from the description in the preceding the valve device is not tight and cannot be fully closed. The oxygen gas flow is closed by the valve device 14 which in turn is actuated by the pressure monitor 17 which senses when the combustion air flow in the tube ceases. The air flow is regulated as previously mentioned by means of the damper device 18. Shown in Fig. 1, further, is only one rod-shaped member 10. In reality, three rods are used in the valve design and are disposed between the diaphragm 11 and the sleeve-shaped member 7 in order for a symmetrical lifting movement to be obtained. Several tests have been carried out with the described valve. The oxygen-enriched air flow has been analysed at different flow settings. At all tests the oxygen content has proved to be constant.

**Claims**

1. A valve device for enrichment of combustion air with oxygen, the valve device then being connected to the supply line for combustion air and in which the valve device comprises a valve body with a chamber (19) which is divided into an upper and a lower portion by a membrane (11) clamped in the chamber, disposed at one side of which membrane is a spring member (12) and disposed at the other side of which is at least one rod-shaped member (10) in a duct in the valve body and wherein disposed in the valve body is a duct (5) for the oxygen gas which via an opening and closing device opens into the supply line (1) the said opening and closing device being connected to the rod-shaped member (10), characterized in that the duct (9) in which the rod-shaped member (10) is disposed is connected to the supply line (1) for the combustion air and to the lower portion in the valve chamber (19), in that the opening and closing device (6, 7, 8) is disposed largely in the centre of the cross-section of the supply line (1) and in that the portion of the oxygen gas duct sited in the supply line is elaborated as a tube, in the mouth part of which are disposed openings (21) and in that above the tube end is disposed an axially displaceable sleeve member (7) which in its lower portion is provided with grooves (8) and which has its upper portion disposed at the rod-shaped member (9), the grooves (8) in the sleeve member then being arranged to interact with the openings (21) in the sleeve portion, said membrane area, spring force and area of openings (21), slots (6) and grooves (8) are dimensioned so that the ratio between the amount of oxygen gas introduced by the valve device into the combustion air line and the amount of combustion air supplied to the line (1) are constant independently of the pressure in the combustion air line.

2. A valve device according to Claim 2, characterized in that the sum of the areas for openings (21) and slots (6) is equal to the cross-sectional area in the oxygen gas duct (5) and in that the sum of the areas of grooves lies within the range of 40–80 percent of the cross-sectional area in the oxygen gas duct (5) when the valve is fully open.

## Patentansprüche

1. Ventilanordnung zur Anreicherung von Verbrennungsluft mit Sauerstoff, wobei die Ventilanordnung mit der Versorgungsleitung der Verbrennungsluft verbunden ist und die Ventilanordnung einen Ventilkörper mit einer Kammer (19) aufweist, die in einen oberen und einen unteren Bereich durch eine in der Kammer festgeklemmte Membran (11) geteilt ist, wobei auf der einen Seite der Membran ein Federelement (12) und auf der anderen Seite wenigstens ein stabförmiges Glied (10) in einem Durchführungskanal in dem Ventilkörper angeordnet ist und wobei in dem Ventilkörper ein Durchführungskanal (5) für das Sauerstoffgas angeordnet ist, der über eine Öffnungs- und Schließeinrichtung in die Versorgungsleitung (1) mündet, wobei die Öffnungs- und Schließeinrichtung mit dem stabförmigen Glied (10) verbunden ist, dadurch gekennzeichnet, daß der Durchführungskanal (9) in dem das stabförmige Glied angeordnet ist, mit der Versorgungsleitung (1) für die Verbrennungsluft und dem unteren Bereich in der Ventilkammer (19) verbunden ist, daß die Öffnungs- und Schließeinrichtung (6, 7, 8) größtenteils im Zentrum des Querschnitts der Versorgungsleitung (1) angeordnet ist und daß der in der Versorgungsleitung gelegene Bereich des Sauerstoffgas-Durchführungskanals als Rohr ausgeführt ist, in dessen Mündungsbereich Öffnungen (21) angeordnet sind und daß oberhalb des Rohrendes ein axial verschiebbares Hülsenglied (7) angeordnet ist, das in seinem unteren Bereich Ausnehmungen (8) aufweist und dessen oberer Bereich an dem stabförmigen Glied (9) angeordnet ist, wobei die Ausnehmungen (8) in dem Hülsenglied derart angeordnet sind, daß sie mit den Öffnungen (21) im Hülsenbereich zusammenwirken, wobei Membranfläche, Federkraft und Fläche der Öffnungen (21), Schlitze (6) und Ausnehmungen (8) derart dimensioniert sind, daß das Verhältnis zwischen der Menge von durch die Ventilanordnung in die Verbrennungsluftleitung eingeführtem Sauerstoffgas und der Menge von durch die Leitung (1) zugeführter Verbrennungsluft unabhängig vom Druck in der Verbrennungsluftleitung konstant ist.

2. Ventilanordnung nach Anspruch 2, dadurch gekennzeichnet, daß die Summe der Flächen der Öffnungen (21) und Schlitze (6) gleich der Querschnittsfläche des Sauerstoffgas-Durchführungskanals (5) ist und daß die Summe der Flächen der Ausnehmungen im Bereich von 40 bis 80 Prozent der Querschnittsfläche des Sauerstoffgas-Durchführungskanals (5) liegt, wenn das Ventil vollständig geöffnet ist.

## Revendications

1. Dispositif de soupape destiné à enrichir de l'air comburant en oxygène, le dispositif de soupape étant relié à une conduite d'arrivée de l'air comburant et comprenant un boîtier de soupape présentant une chambre (19) qui est divisée en une portion supérieure et une portion inférieure par une membrane (11) serrée dans la chambre, sur un côté de laquelle membrane est disposé un élément élastique (12) tandis que, de l'autre côté de cette membrane, est disposé au moins un élément en forme de tige (10) contenu dans un conduit ménagé dans le boîtier de la soupape, et dans lequel un conduit (5) pour le gaz oxygène est disposé dans le corps de la soupape, ce conduit menant, par l'intermédiaire d'un dispositif d'ouverture et de fermeture, dans la conduite d'arrivée (1), ledit dispositif d'ouverture et de fermeture étant relié à l'élément en forme de tige (10), caractérisé en ce que le conduit (9) dans lequel est disposé l'élément en forme de tige (10) est relié à la conduite (1) d'arrivée de l'air comburant et à la portion inférieure (située sous la membrane) de la chambre (19) de la soupape, en ce que le dispositif d'ouverture et de fermeture (6, 7, 8) est disposé en majeure partie dans le centre de la section transversale de la conduite d'arrivée (1), en ce que la portion du conduit de gaz d'oxygène située dans la conduite d'arrivée est réalisée sous la forme d'un tube dans la partie bouche duquel sont disposées des ouvertures (21), et en ce que, au-dessus de l'extrémité du tube, est disposé un élément manchon (7) mobile dans la direction axiale et qui est muni de rainures (8) dans sa portion inférieure tandis qu'il présente sa portion supérieure placée au niveau de l'élément en forme de tige (9), les rainures (8) de l'élément manchon étant alors agencées pour coopérer avec les ouvertures (21) de la partie bouche, l'aire de ladite membrane, la force du ressort et l'aire des ouvertures (21), les fentes (6) et rainures (8) étant dimensionnées de manière que le rapport entre la quantité de gaz oxygène introduit par le dispositif de soupape dans la conduite d'air comburant et la quantité d'air comburant fournies à la conduite (1) soit constant indépendamment de la pression régnant dans la conduite d'air comburant.

2. Dispositif de soupape selon la revendication 1, caractérisé en ce que la somme des aires des ouvertures (21) et des fentes (6) est égale à l'aire de section du conduit de gaz oxygène (5), et en ce que la somme des aires des rainures est comprise dans l'intervalle allant de 40 à 80 pour cent de l'aire de section du conduit de gaz oxygène (5) lorsque la soupape est entièrement ouverte.

FIG 1

6 5

21 8

7

**FIG 2**

6 5

21

7

**FIG 3**

16

PI

14

13

15

PS

17

3

18

**FIG 4**